# EUROPEAN PATENT SPECIFICATION

(11) **EP 0 707 141 B1**
(45) Date of publication and mention of the grant of the patent: **31.03.1999**
(21) Application number: 95116282.5
(22) Date of filing: 16.10.1995
(51) Int. Cl.: F02B 61/02, F02B 33/04, F02B 33/26, F02B 33/44

(54) **Motorcycle**
Motorrad
Motocyclette

(30) Priority: 14.10.1994 JP 248942/94; 14.10.1994 JP 248943/94; 19.10.1994 JP 253704/94
(43) Date of publication of application: 17.04.1996
(73) Proprietor: YAMAHA HATSUDOKI KABUSHIKI KAISHA, Iwata-shi Shizuoka-ken, 438 (JP)
(72) Inventor: Makino, Kenmu, Iwata-shi, Shizuoka-ken, 438 (JP)
(74) Representative: Grünecker, Kinkeldey, Stockmair & Schwanhäusser Anwaltssozietät

(56) References cited:
- DE-A- 3 832 013
- US-A- 4 440 255
- US-A- 4 475 617
- PATENT ABSTRACTS OF JAPAN vol. 16 no. 328 (M-1281) ,16 July 1992 & JP-A-04 094424 (HONDA) 26 March 1992,
- PATENT ABSTRACTS OF JAPAN vol. 8 no. 182 (M-319) [1619] ,22 August 1984 & JP-A-59 075830 (HONDA)

## Description

The present invention relates to a motorcycle comprising an engine assembly having a connecting rod operated supercharger mechanism for compressing intake air by the swinging motion of the connecting rod connecting a piston to a crankshaft, an air cleaner for filtering intake air fed to said supercharger mechanism, an intercooler for cooling the compressed air from said supercharger mechanism and a supercharger storage tank for storing the compressed air supply from said intercooler.

Superchargers have been proposed in recent years for improving engine output by a connecting rod operated supercharger mechanism arranged such that air taken into the crank chamber is compressed by the swinging motion of the connecting rod and supplied to the combustion chamber (for example refer to the Japanese Unexamined Patent Application No. Hei 6-93869).

The supercharger described above requires considerable amount of layout space for the air cleaner for filtering air to the supercharger mechanism, the intercooler for cooling the air heated by the compression, and the supercharge tank for suppressing pressure variation of the compressed air supplied to the cylinder. Moreover, components to be interconnected by intake pipes are required.

It is conceivable to mount the supercharger provided with the connecting rod operated supercharger mechanism described above on a motorcycle provided with the unit swing type engine assembly. When such a supercharger is to be employed in the motorcycle provided with the unit swing type engine assembly, since the engine assembly as a whole swings up and down, the intake system for example may require flexibility depending on the layout, or may require a large space for the layout. As a result, a concern arises that the structure may become complicated and the size of the entire device may increase.

Moreover, as the supercharger tank has a relatively large size it takes up a considerable space and has to be located to avoid temperature rise in the tank. However, sometimes it is difficult to secure the cooling of the supercharger tank while securing the layout space for the tank. Therefore, there is a difficulty in that, depending on the layout, the internal arrangement becomes large sized and the cooling efficiency is adversely affected which may lead to a lowering of the charging efficiency. Moreover, in addition to the space required for the disposal of the supercharger tank for suppressing pressure variations of the compressed air supply to the cylinder another problem may be that the intercooler is disposed within the body cover and the wind running against the vehicle tends to be introduced less around the intercooler, so that the cooling efficiency thereof for appropriately cooling the compressed air is lowered and engine performance adversely affected.

Accordingly, the disposal of the supercharger mechanism and its associated components is of main importance.

Accordingly, it is an objective of the present invention to improve a motorcycle of the type as indicated above in that the layout and the disposal of an associated supercharger mechanism is uncomplicated in size and structure, so as to avoid, for example, complicated piping to connect the different components and to provide prerequisites for appropriate disposal assuring appropriate cooling conditions.

In order to perform the aforeindicated objective, according to the present invention, the motorcycle comprises an engine assembly which is of a unity swing type design wherein an engine and a rear wheel transmission are assembled as a single unit supporting said air cleaner, said intercooler and said supercharger tank, so that said components jointly swing with said engine assembly.

For assuring appropriate cooling of the supercharger storage tank it is preferred said tank to be located outside an engine assembly profile as seen in the longitudinal direction of the motorcycle and to dispose said supercharger tank in the vicinity of the engine.

According to assure appropriate cooling of the intercooler which is disposed inside of a body cover of the motorcycle it is suggested that the body cover be formed with an air introduction inlet for feeding air to said intercooler, wherein said air introduction inlet being directed such that the dynamic air pressure is exerted on said air introduction inlet while the motorcycle is running.

According to the layout of the supercharger mechanism regarding the motorcycle of the present invention, since all the components constituting the supercharger mechanism including the air cleaner, the intercooler and the supercharger storage tank are mounted on the engine assembly itself, which is swingably supported in an unitary design comprising the engine and a rear wheel transmission, no flexibility is required in the intake system connected to those components. Moreover, routing of cables becomes easy and the structure becomes simple accordingly. Furthermore, since those components are let out and disposed close to each other on the engine assembly, a space saving arrangement for those components is found rendering the space necessary to be minimal and avoiding an increase in the size of the entire device.

Moreover, preferably locating the supercharger (storage tank) outside the engine assembly profile and the vicinity of the engine means to locate the tank in a position where the wind against the running vehicle is more likely to flow and the size of the entire supercharger mechanism is prevented from increasing. By such a location of the supercharger tank outside the projection profile of the engine assembly and in the vicinity of the engine, a layout space or a relatively large sized supercharger storage tank is easily secured and, since there is no obstacle in front of the supercharger tank in the way of the wind against the running vehicle, cooling by the wind against the running vehicle is improved and adversed effects on the engine performance such as reduction in charging efficiency due to temperature rise are avoided.

Moreover, as preferably the inlet of air to the intercooler is disposed in form such that dynamic air pressure is exerted to said inlet opening the intercooler functions effectively and additionally prevents adverse effects the engines performance.

Other preferred embodiments of the present invention are laid down in the further subclaims.

In the following the present invention will be explained in greater detail by means of several embodiments thereof in conjunction with the accompanying drawings:
Fig. 1 is a partial side view of a motorcycle of the present invention, specifically a drive and supercharging system thereof,
Fig. 2 is a plane view of fig. 1,
Fig. 3 is a back view of fig. 1,
Fig. 4 is a side view of the motorcycle to which the drive and supercharger mechanisms of fig. 1 are applied to,
Fig. 5 is a schematic cross sectional back view of this embodiment of the present invention,
Fig. 6 is a schematic side view of the aforeindicated embodiment of the present invention,
Fig. 7 is a partial side view of an embodiment of the present invention similar to fig.1,
Fig. 8 is a plane view of the embodiments of fig. 7, similar to fig. 2,
Fig. 9 is a back view of the embodiment of figs. 7 and 8, similar to fig. 3,
Fig. 10 is a side view of the motorcycle according to that embodiment of the present invention, similar to fig. 4,
Fig. 11 is a schematic side view, partially in cross section, of the embodiment of the present invention similar to fig. 6,
Fig. 12 is a scheme for selecting an appropriate disposal area for the supercharger tank with regard to the projection profile of the engine assembly,
Fig. 13 is a partial side view of the motorcycle to which drive and supercharger systems according to another embodiment of the present invention is applied, similar to figs. 1 and 7,
Fig. 14 is a plane view of fig. 13,
Fig. 15 a back view of the present embodiment of figs. 13 and 14, similar to figs. 3 and 9,
Fig. 16 a side view of the scooter type motorcycle according to this embodiment of the present invention, similar to figs. 4 and 10,
Fig. 17 a schematic side view, partially in cross section, of the drive and supercharger mechanisms according to this embodiment of the present invention, similar to figs. 6 and 11,
Fig. 18 is a front view of a cooler tank comprising an intercooler of an embodiment of the present invention,
Fig. 19 is a plane view of fig. 18,
Fig. 20 is a schematic plane view of a modified embodiment of the layout of the disposal of the intercooler and
Fig. 21 is a schematic left side view of said modified embodiment of the layout and disposal of the intercooler of fig. 20.

An embodiment of this invention will be described in reference to the appended drawings.

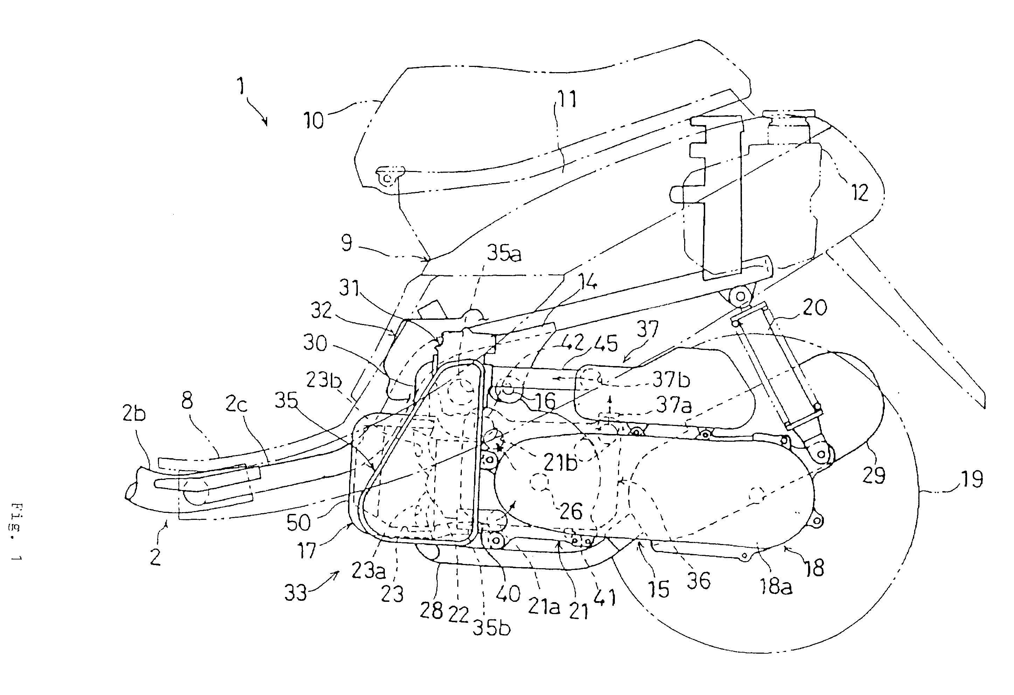

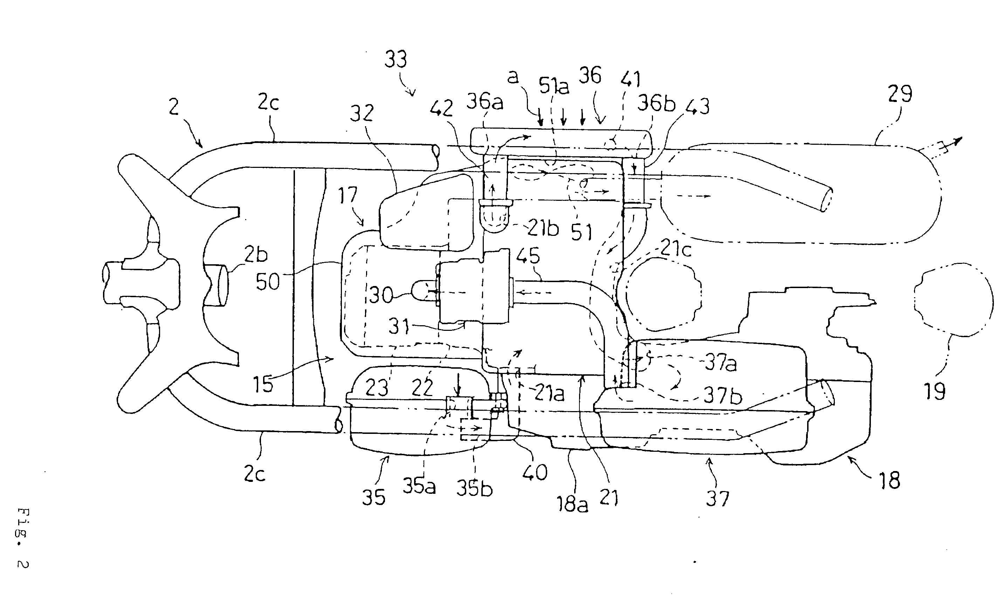

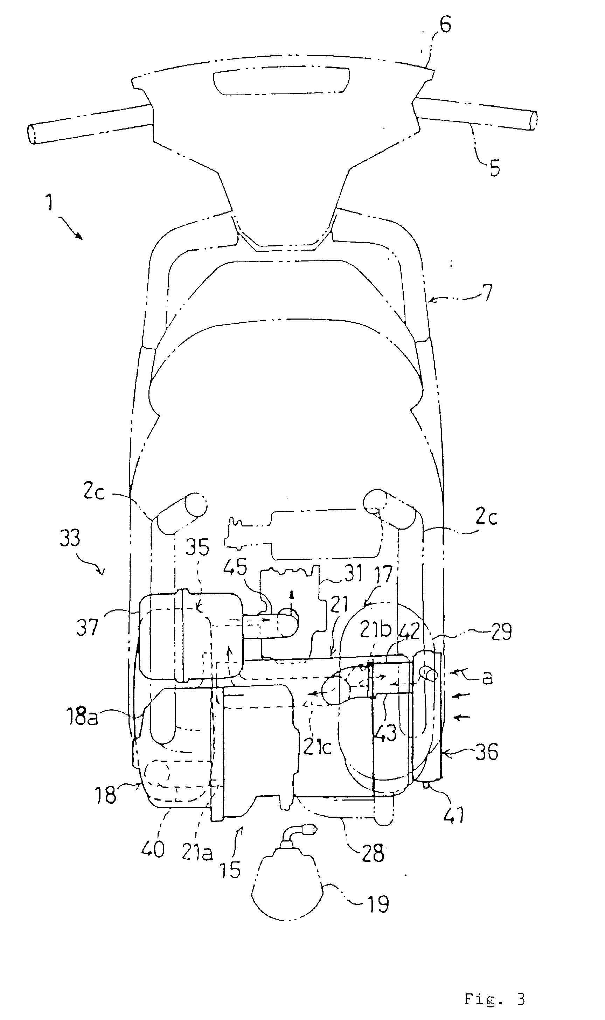

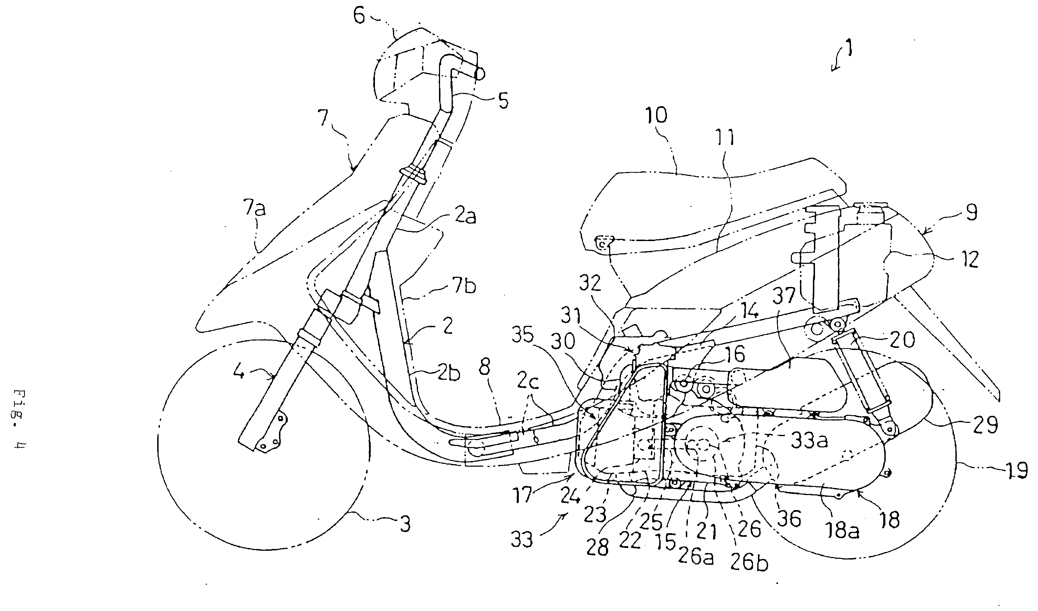

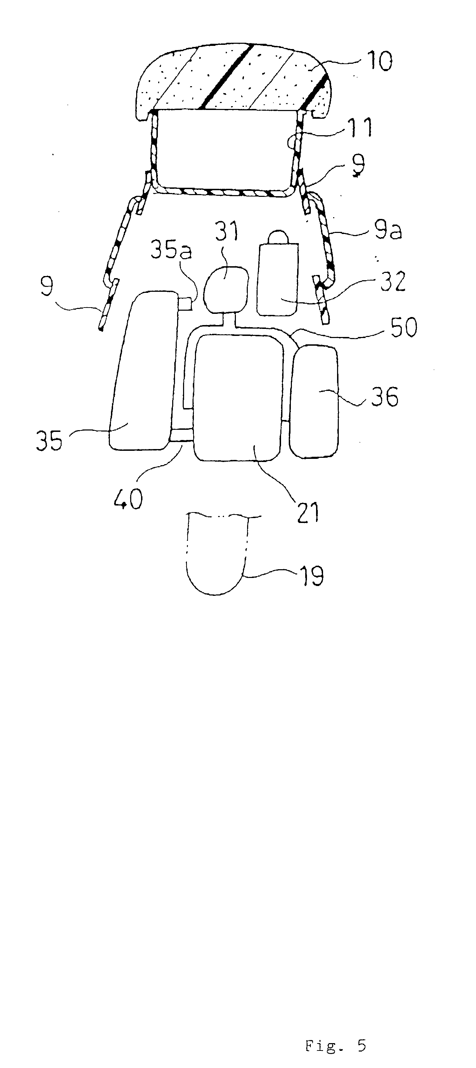

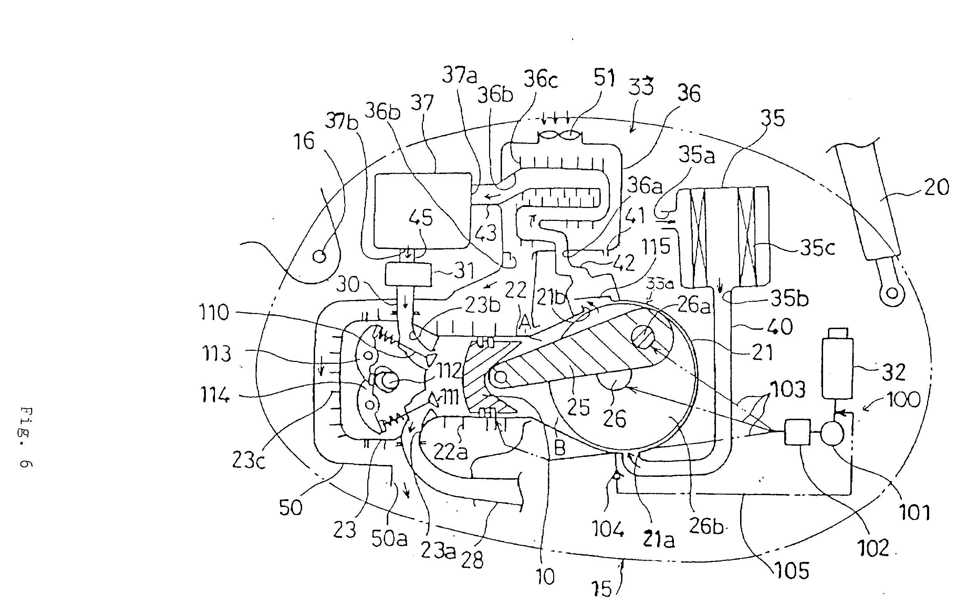

FIGs. 1 through 6 are for explaining the supercharger for a scooter type motorcycle according to an embodiment of this invention. FIGs. 1 through 3 are a front view, a plan view, and a back view, respectively, of a device of this embodiment. FIG. 4 is a side view of the scooter type motorcycle to which the device of this embodiment is applied. FIGs. 5 and 6 are schematic views of positional relationship of components of the supercharger and air flow. The words right and left in this specification are meant as seen forward of the vehicle.

In the figures, the reference numeral (1) denotes a scooter type motorcycle to which the device of this embodiment is applied. A frame (2) of the motorcycle (1) is of an underbone type. The upper end of an generally L-shaped (as seen in side view) main frame (2b) is connected to a head pipe (2a). The lower end of the main frame (2b) is connected to front ends of paired right and left side frames (2c, 2c) which are raised and extended backward. The head pipe (2a) bears a front fork (4) bearing a front wheel (3) for free right and left steering. Steering handlebars (5) are attached to the upper end of the front fork (4).

The steering handlebars (5) are surrounded by a handlebar cover (6) and the head pipe (2a) is surrounded by a front cover (7) made up of a front section (7a) and a rear section (7b). A footboard (8) for placing a foot is arranged at the connecting section between the main frame (2b) and the side frame (2c). Side covers (9) are arranged on both right and left sides of the side frames (2c). Above, the side cover (9) is arranged a seat (10). Below the seat (10) are arranged a stowing compartment (11) and a fuel tank (12), and others.

A unit swing type engine assembly (15) is mounted in an area below the upward bent portion of the right and left side frames (2c). The engine assembly (15) comprises an engine (17) suspension supported for arcuate swinging about a pivot shaft (16) mounted through a bracket (14) between the side frames (2c, 2c), and a rear wheel transmission (18) continuously extending integrally backward from the left side of the engine (17). A belt driven continuously variable transmission (CVT) is installed in the transmission (18). At the rear end of the transmission (18) is rotatably supported a rear wheel (19). A lower end of a rear suspension (20) is pivoted on the upper end of the rear end of a transmission case (18a) of the transmission (18). The upper end of the rear suspension (20) is pivoted on the side frame (2c).

The engine (17) is of a forced air cooled, 4-cycle, single cylinder type constituted as follows: A crankcase (21) is connected to a cylinder block (22), and a cylinder head (23). A piston (24) is inserted for free sliding in the cylinder bore of the cylinder block (22) and connected through a connecting rod (25) to a crank pin (26a) of a crankshaft (26). A drive pulley (not shown) is attached to the left end of the crankshaft (26) and a forced cooling fan (51) for supplying cooling air to the engine (17) is attached to the right end of the crankshaft (26). The engine (17) is surrounded by an air shroud (50) so that air (a) drawn in by the cooling fan (51) passes through the space between the engine (17) and the air shroud (50) to cool the cylinder head (23), the cylinder block (22), and others, and is discharged from an outlet (50a). The numerals (22a, 23c) are cylinder block cooling fins and cylinder head cooling fins, respectively, for increasing heat dissipation areas.

To an exhaust port (23a) led out on the underside surface of the cylinder head (23) is connected an exhaust pipe (28). To the rear end of the exhaust pipe (28) is connected a muffler (29) arranged to the right of the rear wheel (19). To an intake port (23b) led out to the topside surface of the cylinder head (23) is connected an intake manifold (30). To the upstream end of the intake manifold (30) is connected a carburettor (31) located above the cylinder block (22). To the right of the carburettor (31) is arranged an oil tank (32). The exhaust port (23a) and the intake port (23b) are opened and closed by an exhaust valve (111) and an intake valve (110) which in turn are driven to open and close by a camshaft (112) through exhaust side and intake side tappets (114) and (113), respectively.

The engine assembly (15) is provided with a connecting rod operated supercharger (33) comprising a connecting rod operated supercharger mechanism (33a), an air cleaner (35) for supplying air to the connecting rod operated supercharger mechanism (33a), an intercooler (36) for cooling compressed air supplied form the connecting rod operated supercharger mechanism (33a), and a storage tank (37) for suppressing pressure variation in the compressed air supplied to the cylinder bore by storing the compressed air supplied from the intercooler (36). These supercharger components (35 - 37) are mounted on the unit swing type engine assembly (15) so as to swing in a body with the engine assembly (15).

The connecting rod operated supercharger mechanism (33a) constituted as follows: A connecting rod (25) and a crank web (26b) which are in sliding contact with the inner circumferential wall surface of the crankcase (21) divide the crank chamber into an intake chamber (A) and a compression chamber (B). An intake port (21a) communicating with the intake chamber (A) is formed in the lower part of the left wall of the crankcase (21), and a discharge port (21b) communicating with the compression chamber (B) is formed in the upper part of the right wall. Thus, a positive-displacement type supercharger is constituted to compress air drawn in by the swinging motion of the connecting rod (25). Such a constitution is described in detail in the above-mentioned Japanese Unexamined Patent Application Hei 6-93869.

The connecting rod operated supercharger mechanism (33a) is also connected to a lubrication device (100) which is constituted as follows: Lubrication oil from the oil tank (32) is drawn and pressurized by an oil pump (102) through an oil strainer (101). The pressurized oil is supplied to sliding parts such as the connecting rod (25), the crank web (26b) and others through a delivery pipe (103). Part of the supplied oil which has collected at the bottom of the crankcase (21) is recovered through an oil return pipe (105) having a check valve (104) so that the oil is reused through circulation.

The connecting rod operated supercharger mechanism (33a) is constituted with the high supercharge pressure compression chamber located on the upper side while the intake chamber is located on the lower side so that air drawn in from the underside of the crankcase (21) is discharged from the upper side. As a result, the lubrication oil supplied by the lubrication device (100) is easily separated by its own weight from the compressed air in the crank chamber so that the lubrication oil is prevented from mixing with the compressed air. The oil separated as described above also works as sealing agent on the sliding surfaces between the connecting rod and others in the crankcase (21), resulting in improved airtightness and supercharge pressure.

The air cleaner (35) is of a generally triangular shape as seen in side view and has in its inside an air cleaner element (35c), located as seen in plan view in a corner area formed by the left wall of the cylinder head (23) and the front wall of the transmission case (18a), and bolted to the transmission case (18a) and the crankcase (21). An inlet (35a) of the air cleaner (35) is open into the side cover (9) toward the inner side of a vehicle, and the outlet (35b) is located at the lower part of the air cleaner (35). The outlet (35b) is connected through an an air introduction tube (40) to the intake port (21a) of the crankcase (21).

Thus, since air passing through the air cleaner (35) flows from up to downward and into the supercharger mechanism, the air cleaner element is prevented from being contaminated with the lubrication oil blown back from the crank chamber. Also, since the outlet (35b) of the air cleaner (35) is located near the intake port (21a) of the supercharger mechanism, the length of the air introduction tube (40) is made shorter and accordingly intake resistance is reduced. As a result, supercharge pressure is increased and engine performance is improved. Furthermore, since the inlet (35a) of the air cleaner (35) is open into the upper part of the side cover (9), rain water is prevented from entering the air cleaner (35).

The intercooler (36) is of air cooled type in a rectangular box shape as seen in side view located to cover an inlet (51a) of the cooling fan (51) at the right upper side of the crankcase (21) and is secured to the engine (17) through a bracket (not shown). Thus, the air drawn in for cooling the engine is also used for cooling the intercooler (36). As a result, an electric fan specially for cooling the intercooler is made unnecessary to reduce cost.

The intercooler (36) is formed with a compressed air inlet (36a) at its upper front side corner area, and a compressed air outlet (36b) at its upper rear side corner area, and they are connected to each other through an internal passage (36d) having cooling fins (36c) for increasing heat dissipation area on the internal passage (36d). A slurry drain plug (41) is provided at the bottom wall of the intercooler (36). This prevents slurry which has collected on the bottom of the inter cooler (36) is easily drained and prevented from flowing back into the engine.

The compressed air inlet (36a) of the intercooler (36) is connected to the outlet (21b) of the crankcase (21) through an inlet side air intake pipe (42) and the connection area is provided with a reed valve (115) for preventing the compressed air from flowing back into the crankcase (21). The compressed air outlet (36b) is connected through a connection passage (21c) (not shown in FIG. 6) to an introduction inlet (37a) of a supercharger tank (37) which will be described later.

The supercharger tank (37) is located between the rear wheel transmission (18) and the side frames (2c) and bolted to the topside of the transmission case (18a). As a result, the supercharger tank (37) is located at about the same height with the carburettor (31). At the upper inner wall of the supercharger tank (37) is formed a flow outlet (37b) connected through an intake pipe (45) located above the crankcase (21) to the carburettor (31). Since the supercharger tank (37) and the carburettor (31) are located at approximately the same height, the intake pipe (45) can be made in a simple shape with increased degree of freedom in the shape. Furthermore, since the supercharger tank (37) is arranged on the transmission case (18a) side, namely on the opposite side of the muffler (29), the lubrication oil which has collected in the supercharger tank (37), even if it leaks, cannot be sprayed on the muffler (29) and white smoke is prevented from being produced.

The function of this embodiment will be described below.

In the supercharger (33) of this embodiment, air filtered through the air cleaner (35) is drawn through the introduction pipe (40) into the crankcase (21) and compressed as the connecting rod (25) swings. The compressed air is pressure fed through the intake pipe (42) into the intercooler (36). The air cooled in the intercoolcr (36) is pressure fed through the connection passage (21c) and the intake pipe (43) to the supercharger tank (37) and stored there. The compressed air in the supercharger tank (37) is supplied through the intake pipe (45) to the carburettor (31) where it is mixed with fuel and the mixture is supplied through the intake manifold (30) to a combustion chamber. Exhaust gas is discharged through the exhaust pipe (28) out of the muffler (29) (Refer to the broken line arrows in FIGs. 1 - 3).

In the embodiment functioning as described above, since the components of the supercharger (33), namely the air cleaner (35), the intercooler (36), and the supercharger tank (37), are laid out and secured to the unit swing type engine assembly (15) itself, those components (35 - 37) move up and down together without relative movements among them. As a result, no flexibility is required for the connection among those components (35 - 37), cable routing structure is made simple. Since the pipes (40, 42 - 45) may be made of rigid materials shapes, attachment strength of the entire device is enhanced.

Also, since the components (35 - 37) are mounted on the engine assembly (15) itself, they are laid out by efficiently utilizing vacant spaces around the engine: The air cleaner (35) in the corner area defined by the cylinder block (21) and the transmission case (18a), the intercooler (36) to the right of the crankcase (21), and the supercharger tank (37) in the space between the transmission case (18a) and the side frames (2c). As a result, the entire supercharger is made in a compact size.

While the above embodiment is described by way of an example of the scooter type motorcycle, this invention is not limited to such an example but can be applied to any motorcycle as long as it is provided with a unit swing type engine assembly.

A second embodiment of this invention will be described in reference to the appended drawings.

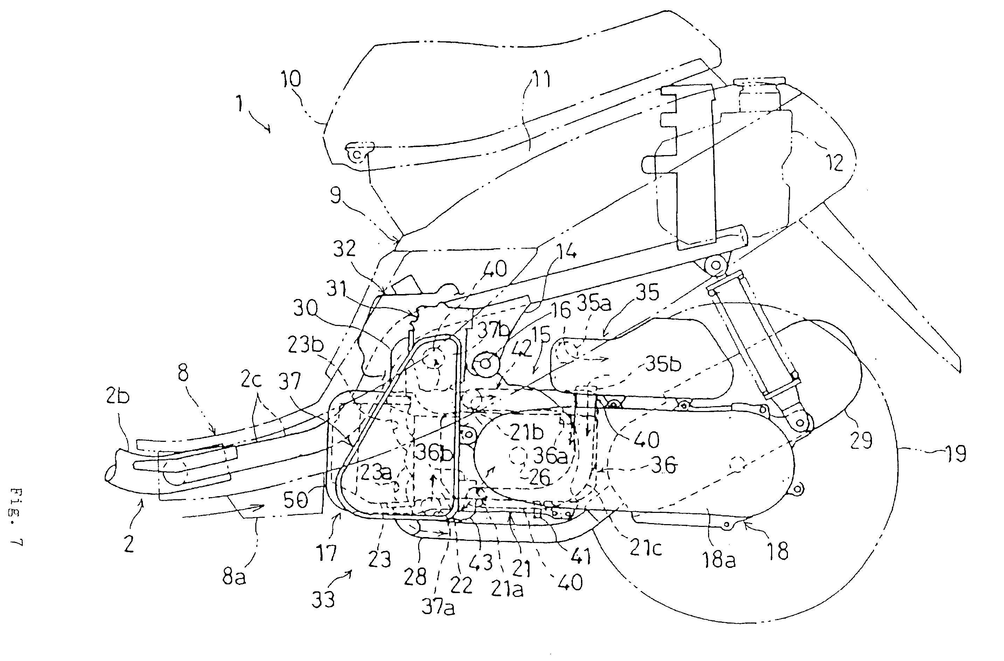

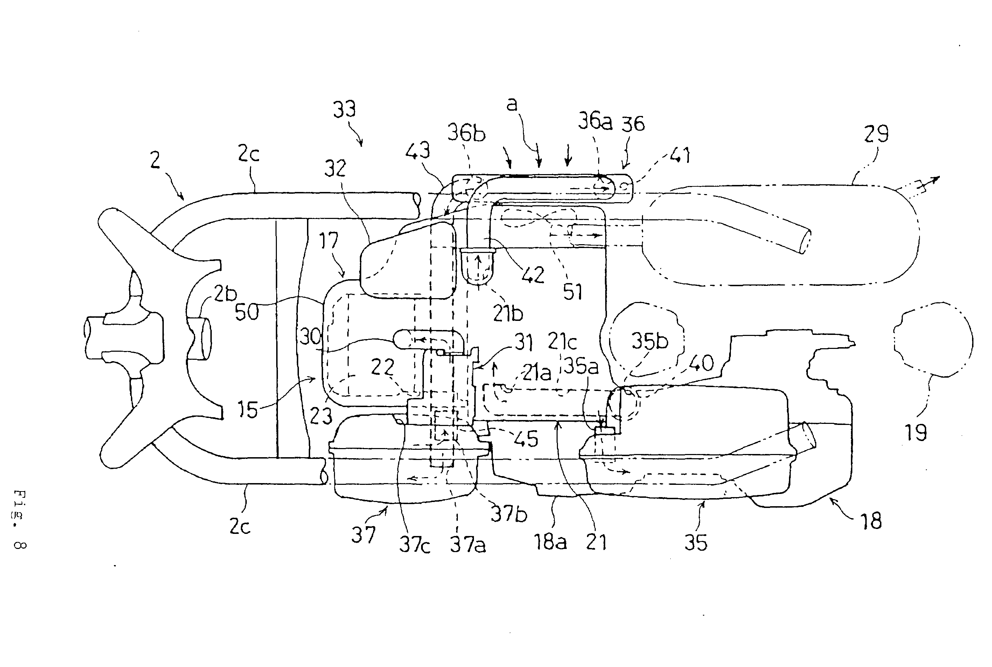

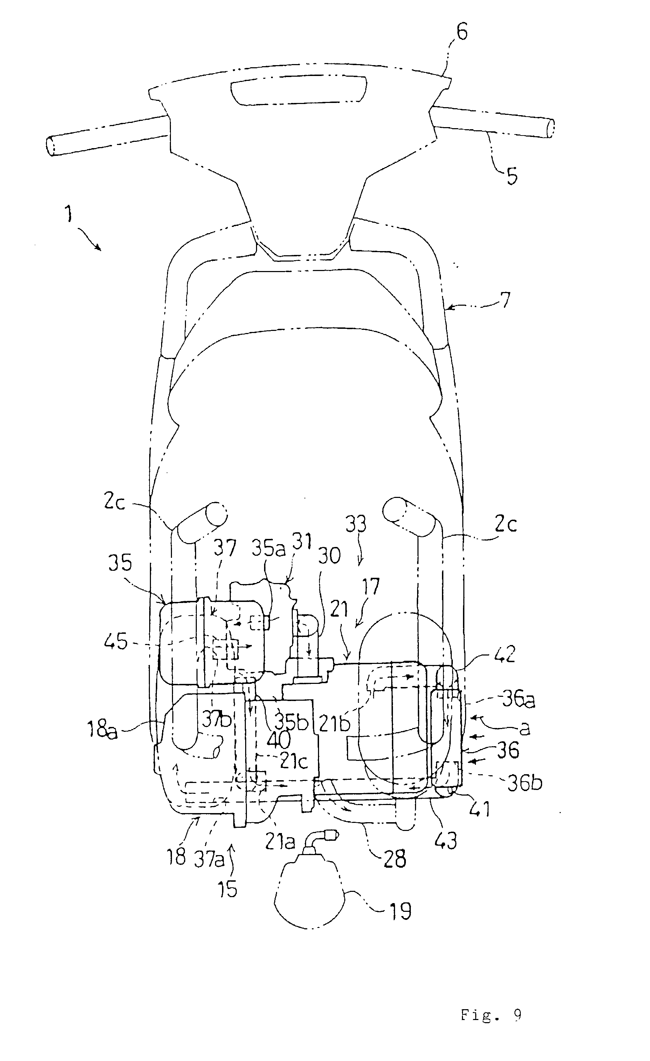

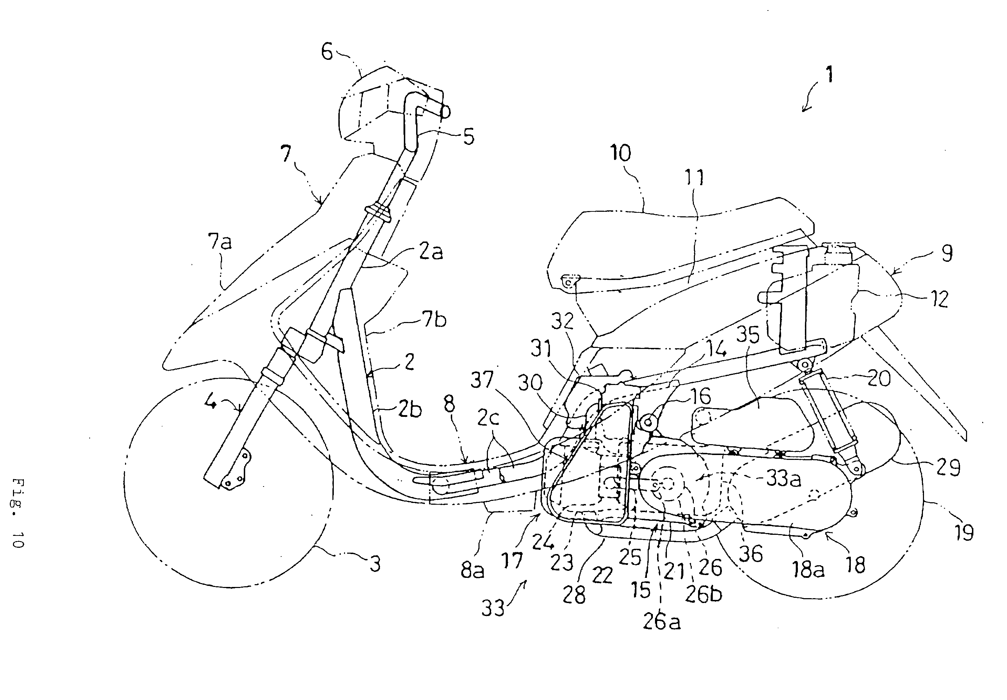

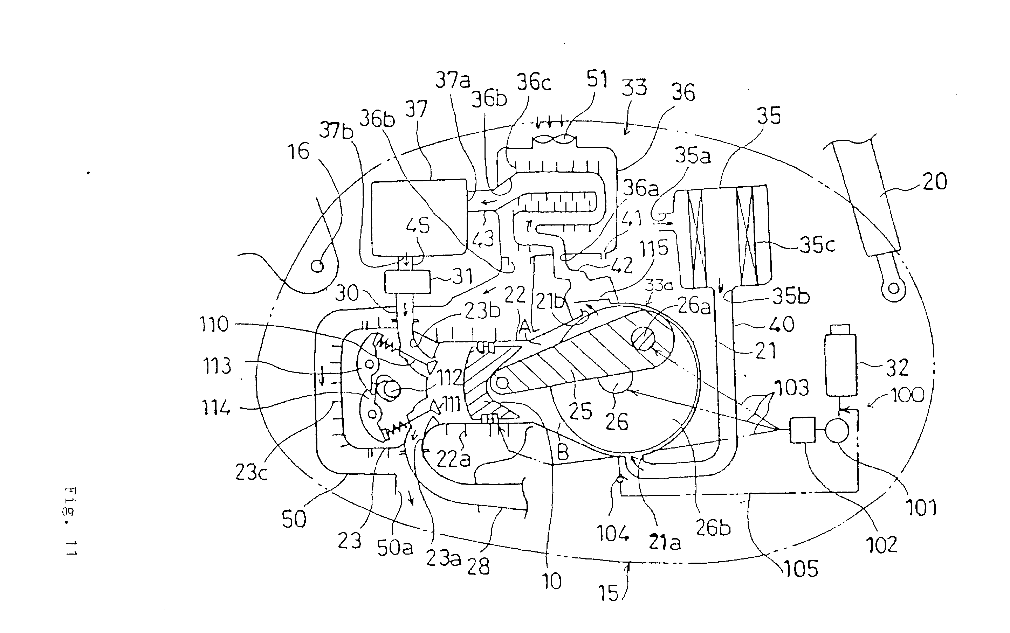

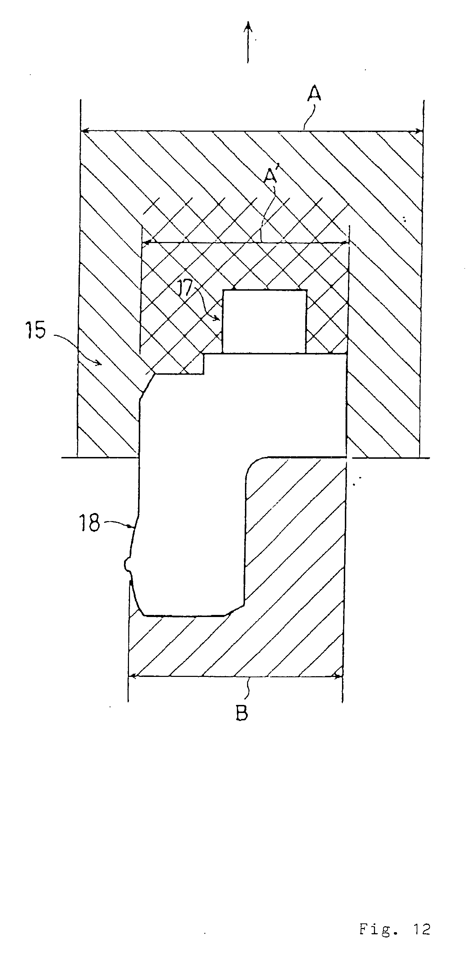

Figs. 7 through 12 are for explaining the supercharger for a scooter type motorcycle according to another embodiment of this invention. Figs. 7 through 9 are a front view, a plan view, and a back view, respectively, of a device of this embodiment. Fig 10 is a side view of the scooter type motorcycle to which the device of this embodiment is applied. Figs 11 and 12 are schematic views of positional relationship of components of the supercharger and air flow. The words right and left in this specification are meant as seen forward of the vehicle.

As far as said embodiment complies with the first one as explained hereinbefore the description is not repeated here but reference is made to the corresponding explanations given above. Only those features and structures which are different from the first embodiment are explained hereinafter.

The air cleaner (35) includes an air cleaner element (35c) and is located between the rear wheel transmission (18) and the side frames (2c) and bolted to the topside of the transmission case (18a). The intake port (35a) of the air cleaner (35) is directed toward the inside of the vehicle body and is open within the side cover (9). The outlet (35b) of the air cleaner (35) is open downward and connected to a connection passage (21c) formed in the crankcase (21) through an air introduction tube (40) which in turn is connected for communication to the intake port (21a).

As described above, since the outlet (35b) of the air cleaner (35) is positioned above the inlet (21c) of the crankcase (21), the air cleaner element is prevented from being contaminated by the lubrication oil contained in the intake air blown back from the crankcase, to reduce lubrication oil consumption. Since the intake port (35a) of the air cleaner (35) is open at the upper portion of the side cover (9), rain water is prevented from entering the air cleaner (35).

The design and cooling arrangement of the intercooler 36 basically complies with that of the first embodiment. Differences are as follows:

The intercooler (36) is formed with a compressed air inlet (36a) in its top wall portion and a compressed air outlet (36b) in its bottom wall front portion, and they are connected through an internal passage (36b). The outer surface of the internal passage (36b) is provided with cooling fins (36c) for increasing heat radiation area. A drain plug (41) for draining slurry collected on the bottom of the intercooler (36) is provided in the rear portion of the bottom wall, making it easy to drain the slurry and preventing the slurry from flowing back toward the engine. Since compressed air inlet (36a) connected to the engine side is formed in the top wall, the slurry is prevented from flowing back to the engine side.

The compressed air inlet (36a) of the intercooler (36) is connected for communication to the outlet (21b) of the crankcase (21) through an inlet side intake tube (42) arranged on the topside of the crankcase (21). At the connection point is provided a reed valve (115) for preventing reverse flow of the compressed air into the crankcase (21). The compressed air outlet (36b) is connected through an outlet side intake tube (43) arranged on the underside of the crankcase (21) to an introduction port (37a) of the supercharger tank (37) which will be described hereinafter.

The supercharger tank (37) is of a generally triangular shape in side view and located in a position outside the front elevational projection profile of the engine assembly (15) in the vicinity of the engine (17). More precisely, the supercharger tank (37) is located in a corner area formed by the cylinder block (22), the left side wall of the cylinder head (23), and the front wall of the transmission case (18), and bolted to the transmission case (18a) and the crankcase (21). The air introduction plate (8a) is located in front of the supercharger tank (37).

An introduction port (37a) of the supercharger tank (37) is formed in the lower part of the inner wall (37c) of the tank (37). An outflow port (37b) is formed in the upper part of the inner wall (37c). Since the outflow port (37b) is located above the introduction port (37a) as described above, lubrication oil is securely separated by its own weight from the compressed airwithin the tank and restricted from mixing with the compressed air.

The carburettor (31) is located adjacent to the inner side wall (37c) of the supercharger tank (37) and at approximately the same height with that of the outflow port (37b), and connected to the outflow port (37b) of the supercharger tank (37). As described above, since the outflow port (37b) of the supercharger tank (37) is located approximately the same height with that of the carburettor (31) in its vicinity, the intake tube (45) can be made in a simple shape with a short passage length. As a result, the passage resistance is reduced and the engine performance is improved accordingly. Since the supercharger tank (37) is located on the transmission case (18a) side, namely opposite the outlet direction of the exhaust pipe (28), the lubrication oil collected in the supercharger tank (37), even if it seeps out, cannot be sprayed on the exhaust pipe (28), and white smoke is prevented from being produced.

The function of this embodiment will be described below.

In the supercharger (33) of this embodiment, air filtered through the air cleaner (35) is drawn through the introduction pipe (40) and the connecting passage (21c) into the crankcase (21) and compressed as the connecting rod (25) swings. The compressed air is pressure fed through the intake pipe (42) into the intercooler (36). The air cooled in the intercooler (36) is pressure fed through the connection passage (21c) and the intake pipe (43) to the supercharger tank (37) and stored there. The compressed air in the supercharger tank (37) is supplied through the intake pipe (45) to the carburettor (31) where it is mixed with fuel and the mixture is supplied through the intake manifold (30) to a combustion chamber. Exhaust gas is discharged through the exhaust pipe (28) out of the muffler (29) (Refer to the broken line arrows in FIGs. 1 - 3).

In the device of this embodiment functioning as described above, since the supercharger tank (37) is located in the corner area formed by the left side wall of the cylinder block (22) and the front wall of the transmission case (18a), vacant space in the engine assembly (15) is utilized so that the layout space for the supercharger tank (37) which is relatively large among the components of the supercharger (33) can be easily secured.

Since the supercharger tank (37) is located in a position outside the front elevational projection profile of the engine (17) and on the right side of the cylinder block (22), there is no obstacle in front of the supercharger tank (37) in the way of the wind flow against the running vehicle, cooling by the wind against the running vehicle is improved and reduction in charging efficiency due to temperature rise is avoided. Furthermore, since the air introduction plate (8a) is arranged in font of the supercharger tank (37), the wind against the running vehicle is more efficiently introduced by the air introduction plate (8a) to the supercharger tank (37) to further increase cooling efficiency.

In this embodiment, since all the components constituting the supercharger (33) such as the air cleaner (35), intercooler (36), supercharger tank (37), etc. are located on and secured to the unit swing type engine assembly (15) itself, those components (35 - 37) swing together with the engine assembly (15). Therefore, no relative movement occurs among those components, no flexibility is required in communication connection among those components, and cable routing is simplified. Furthermore, since the tubes (40, 42 - 45) can be made of materials and in shapes having rigidity and strength, attachment strength of the entire structure is increased.

Also, since the components (35 - 37) are mounted on the engine assembly (15) itself, they are laid out by efficiently utilizing vacant spaces around the engine: The air cleaner (35) between the transmission case (18a) and the side frames (2c), tire intercooler (36) to the right of the crankcase (21), and the supercharger tank (37) in the corner ared between the cylinder block (22) and tire transmissions case (18a). As a result, the entire supercharger is made in a compact size.

While the supercharger tank (37) is located in the corner area between the engine (17) and the transmission case (18a) in the above embodiment, this invention is not limited to that arrangement but, as described in reference to Figs.6-12 it may be in any location as long as the location is outside the front elevational projection profile of the engine assembly (15) in the vicinity of the engine (17). The same effect is obtained by such a positioning.

While the above embodiment is described by way of an example of the scooter type motorcycle, this invention is not limited to such an example but can be applied to any motorcycle such as those provided with a unit swing type engine assembly, or with an engine assembly fixed to the vehicle body.

According to the second embodiment to located the supercharger tank (37) outside the engine assembly profile and in the vicinity of the engine (17) means to locate the tank (37) in a position where the wind against the running vehicle is more likely to flow and the size of the entire arrangement is prevented from increasing. Specifically the position means the are (A) as shown in Fig. 12 including the right and left sides of the engine (17) as seen from the front of the vehicle and in front of the engine (17), excluding the area (B) in the projection profile. A layout in the area (A') in front of the engine (17) is specially preferable. In the case, the layout space for the supercharger tank is easily secured and the cooling by the wind against the running vehicle is reliably improved.

Since the supercharger tank (37) constituting the supercharger is located in a position outside the projection profile of the engine assembly and in the vicinity of the engine (17), a layout space for the relatively large sized supercharger tank (37) is easily secured and, since there is no obstacle in front of the supercharger tank (37) in the way of the wind against the running vehicle, cooling by the wind against the running vehicle is improved and adverse effects on the engine performance such as reduction in charging efficiency due to temperature rise are avoided.

A third embodiment of this invention will be described in reference to the appended drawings.

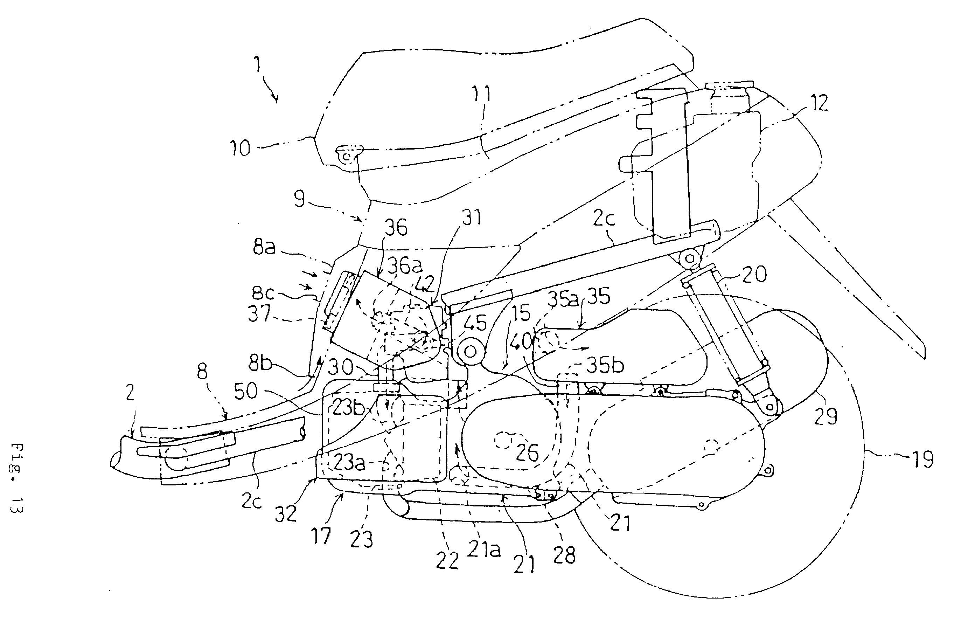

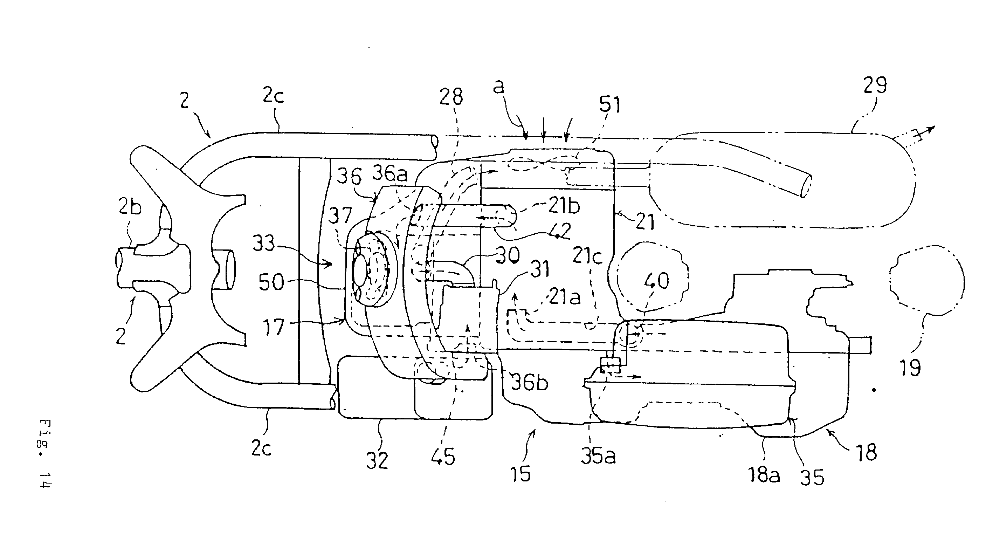

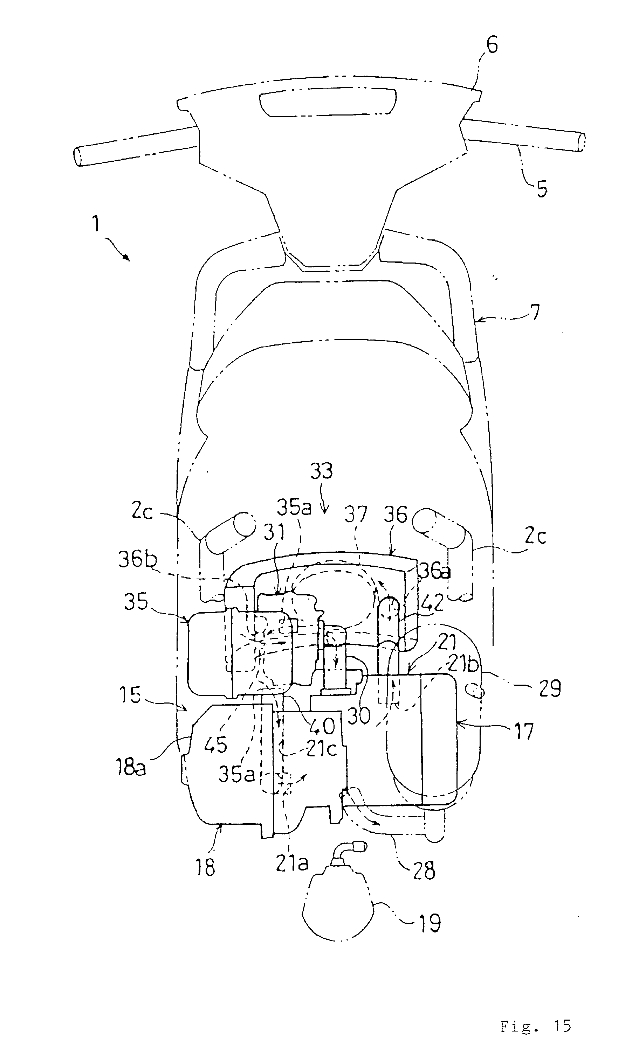

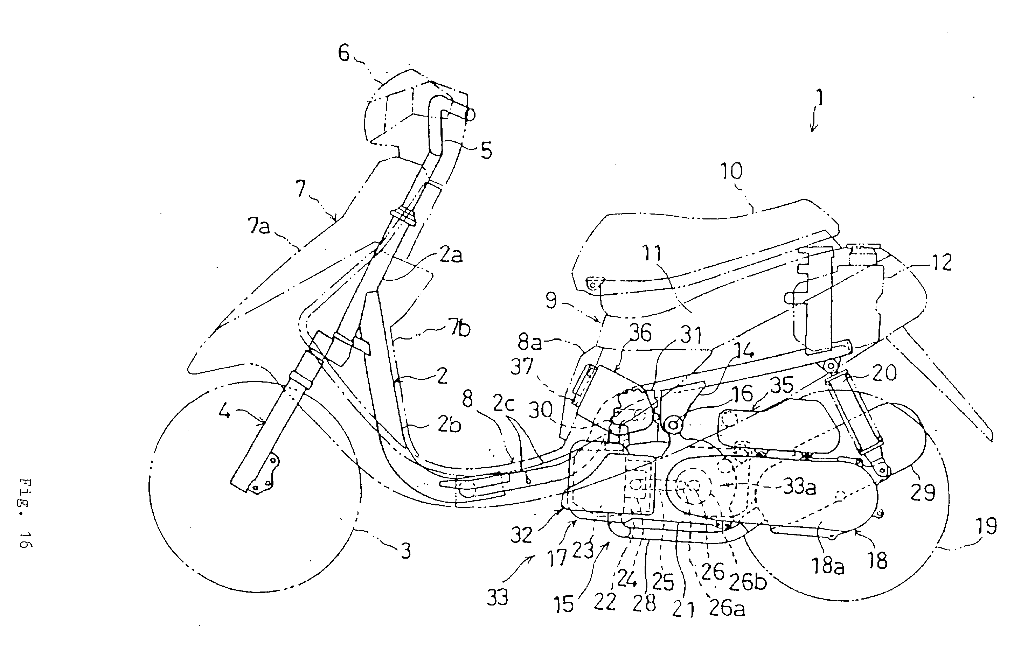

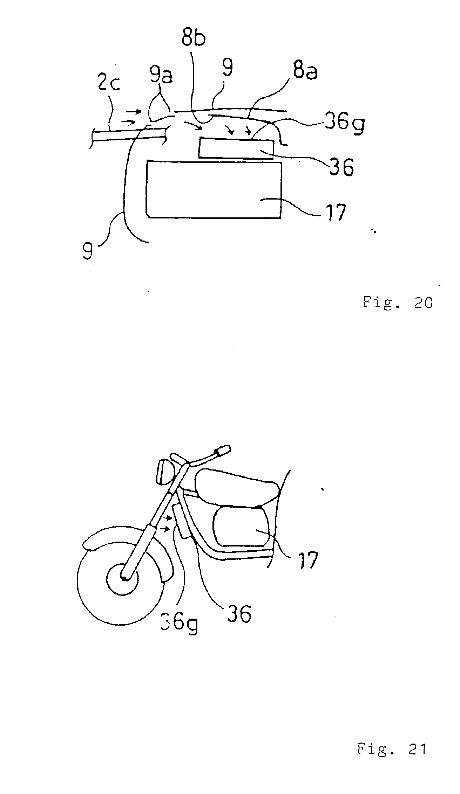

Figs. 13 and 21 are for explaining a scooter type motorcycle comprising a supercharger according to an embodiment of this invention. Figs. 13 through 15 are a front view, a plan view, and a back view, respectively, of a device of this embodiment. Fig. 16 is a side view of the scooter type motorcycle to which the device of this embodiment is applied.

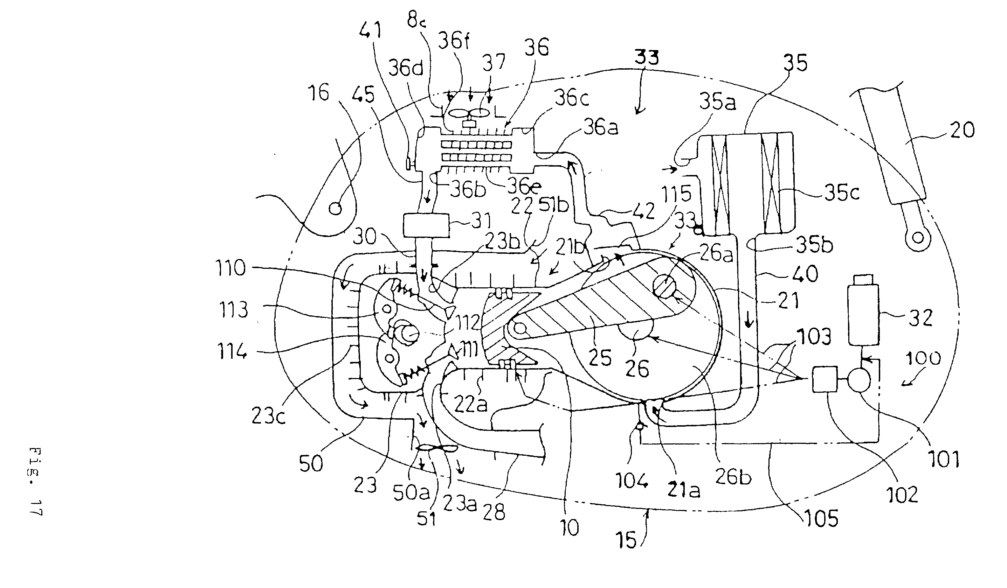

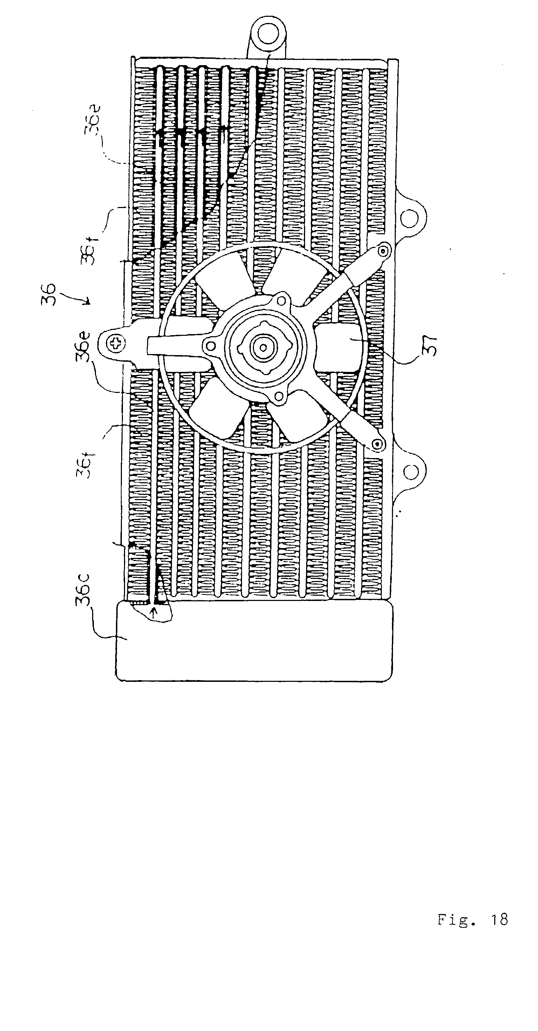

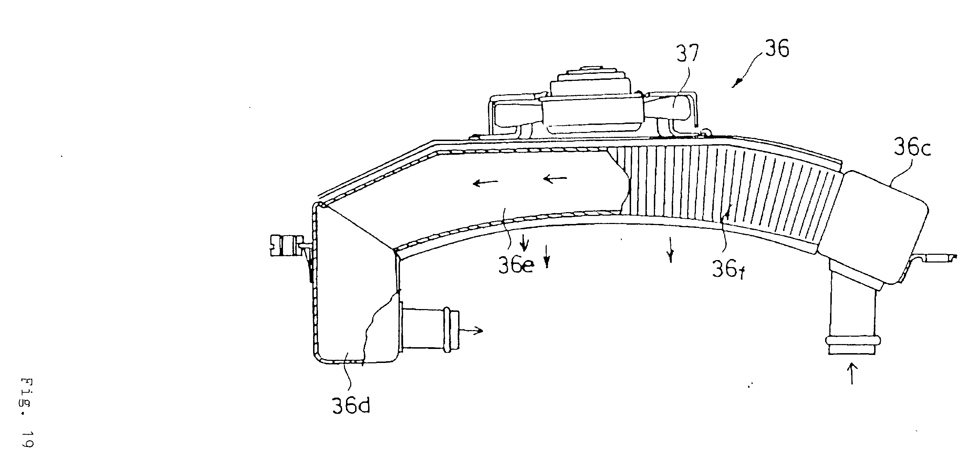

Fig. 17 is an entire schematic view. Figs. 18 and 19 are front elevation and plan view of the cooler tank, respectively.

The words right and left in this specification are meant as seen forward of the vehicle.

Again, with respect to said third embodiment only those features are explained with respect to the figures hereinafter which differ from the aforediscussed embodiments.

An air introduction duct (8a) is bulge formed on the front face of the footboard cover (8) located below the seat (10).

Though the air introduction opening (8b) is opened downward, since the footboard cover (8) is curved from the lower front of the air introduction opening (8b) toward rear upward of the air introduction opening (8b), the footboard (8) serves as an air introduction plate to exert dynamic air pressure on the air introduction opening (8b) when the vehicle is running. The downward opening of the air introduction opening (8b) on the other hand prevents rain water from being directly introduced to the intercooler (36) provided with an electric fan (37) which will be described later, and the electric fan (37) is less likely to malfunction.

Here, instead of the air introduction opening (8b), an air intake port (8c) may be provided in front of the cooler tank (36). In that case, a sufficient dynamic pressure can be introduced and the electric fan (37) may be eliminated. If the air introduction port (8b) or (8c) is provided above the footboard cover (8), the footboard cover (8) serves as a shield against mud from under the vehicle body, making the performance of the cooler tank (36) less likely to lower due to the mud coming in.

An oil tank (32) is disposed in a corner area formed by the left side walls of the cylinder block (22) and the cylinder head (23) and the transmission case (18a). By placing the heavy oil tank (32) in the lower part of the vehicle body, the center of gravity of the entire vehicle is lowered, resulting in stabilized running of the vehicle.

The connecting rod operated supercharger mechanism (33a) is also connected to a lubrication device (not shown) for supplying oil to sliding parts such as the connecting rod (25), the crank web (26b) and others. The supplied oil is recovered from the bottom of the crankcase (21) and circulated.

Regarding the disposal of the air cleaner (35) as indicated above, since air passing through the air cleaner (35) flows from up to downward and into the supercharger mechanism, the air cleaner element is prevented from being contaminated with the lubrication oil blown back from the crank chamber. Also, since the outlet (35b) of the air cleaner (35) is located near the intake port (21a) of the supercharger mechanism, the length of the air introduction tube (40) is made shorter and accordingly intake resistance is reduced. As a result, supercharge pressure is increased and engine performance is improved. Furthermore, since the inlet (35a) of the air cleaner (35) is open into the upper part of the side cover (9), rain water is prevented from entering the air cleaner (35).

The intercooler (36) is of a generally rectangular box shape as seen in its front view and curved as seen in plan view, is located to surround a carburettor (31) located above the cylinder head (23) and secured to the engine (17) through a bracket (not shown). The intercooler (36) is located inside the air introduction duct (8a) of the footboard (8) and the side cover (9). Thus, the body covers (8, 9) are also used as covers for the intercooler to make a separate heat insulation cover unnecessary. The air introduction duct (8a) also serves as a mud guard to protect performance of the cooler tank (36) from being lowered by mud on the tank.

The intercooler (36), also designated as coolertank, as described above is an integral structure made up of an intercooler and a supercharger tank and constituted as follows: A plural number of cooler pipes (36e) in a flattened shape are, at their right and left ends, connected to and opened into inlet and outlet headers (36c, 36d). Each of the cooling pipes (36e) is provided with cooling fins (36f). The inlet and outlet headers (36c, 36d) are designed with sufficient volumes for suppressing the pressure variation described above. Therefore, those headers (36c, 36d) serve also as storage tanks. An electric fan (38) is provided at a position approximately opposite the air introduction duct (8a) at the front outside center of the intercooler (36) to draw air from the lower end opening (8b) of the air introduction duct (8a) and sends it over the outer surfaces of the pipes (36e) and headers (36c, 36d) to cool them.

The cooler tank (36) is formed with a compressed air inlet (36a) on its right side with respect to the vehicle width direction and with a compressed air outlet (36b) on the left side. A slurry drain plug (not shown) is provided on the bottom of the cooler tank (36). The compressed air inlet (36a) is connected through an intake pipe (42) to an outlet (21b) of the crankcase (21).

A carburettor (31) is disposed adjacently behind the intercooler (36) and connected through an intake pipe (45) to the compressed air outlet (36b) of the intercooler (36). As described above, since the air outlet (36b) of the intercooler (36) is placed at approximately the same height with that of and adjacent to the carburettor (31), the intake pipe (45) is formed in a simple shape with a short length. As a result, air passage resistance is reduced and the engine performance is increased accordingly.

The vertical air flow in the supercharger (33) noted here, compressed air from the outlet (21b) of the crankcase (21) flows from under upward and pressure fed to the cooler tank (36), and from the cooler tank (36) downward to the carburettor (31), so as to form a so-called trap structure. This prevents lubrication oil from flowing from the crankcase (21) back to the cooler tank (36), and prevents fuel from flowing from the carburettor (31) back to the intercooler (36).

The function of this embodiment will be described below.

In the supercharger (33) of this embodiment, air filtered through the air cleaner (35) is drawn through the introduction pipe (40) into the crankcase (21) and compressed as the connecting rod (25) swings. The compressed air is pressure fed through the intake pipe (42) into the intercooler (36). The air cooled in the intercooler (36) is pressure fed through the connection passage (21c) air the intake pipe (43) to the supercharger tank (37) and stored there. The compressed air in the supercharger tank (37) is supplied through the intake pipe (45) to the carburettor (31) where it is mixed with fuel and the mixture is supplied through the intake manifold (30) to a combustion chamber. Exhaust gas is discharged through the exhaust pipe (28) out of the muffler (29) (Refer to the broken line arrows in FIGs.13-15).

In this embodiment as described above, since the intercooler (36) is located at the position inside the air introduction duct (8a) and the side cover (9) to surround the carburettor (31) above the cylinder head (23), air is introduced not only by the electric fan but also by dynamic pressure so that compressed air is reliably cooled to improve the engine performance. The cooling air, after passing through the intercooler (36), is sent to the carburettor (31) and the engine (17) to ventilate the areas around the carburettor (31) and the engine (17). As a result, temperature rise of the carburettor (31) is held down. This also avoids adverse effect on the engine performance.

Since the intercooler (36) and supercharger tank (37) are united in one body in this embodiment, a less space suffices in comparison with the case in which the intercooler and supercharger tank are made separately. As a result, the layout space is easily secured and the device is prevented from becoming of a large size.

Furthermore in this embodiment, since the air cleaner (35) and the intercooler (36) serving also as supercharger tank is disposed and secured on the unit swing type engine assembly (15) itself, those components (35, 36) swing together with the up and down swing of the engine assembly. Therefore, no flexibility is required from connections among those components (35, 36). This simplifies cable routing. This also permits to use materials having rigidity and strength for the pipings (40, 42) and increases attachment strength of the entire device accordingly.

Furthermore, since the air cleaner (35) and the intercooler (36) are mounted on the engine assembly itself, vacant spaces around the engine are effectively used to compactly lay out the components such as the air cleaner (35) between the transmission case (18a) and the side frames (2c) and the intercooler (36) in front of the engine (17), and to make the supercharger as a whole compact.

While the intercooler (36) is disposed in the vehicle center in the above embodiment, this may also be disposed as shown in FIG.20 at a position on a side of the engine (17) and within the side cover (9). In that case, an air introduction inlet (9a) of the side cover (9) is formed to be directed forward so that dynamic air pressure is exerted on the inlet (9a). The air introduction inlet (8b) of the air introduction duct (8a) is also positioned to face the air introduction inlet (9a).

While the above embodiment is described by way of an example of the cooler tank (36) in which an intercooler and a supercharger tank is integrated, they may be provided separately. In that case, the supercharger tank is preferably disposed for example at a position behind the intercooler and by the right side of the carburettor. This makes it possible to send cooling air from the intercooler also to the supercharger tank to cool it.

While this invention is premised on the arrangement of the intercooler disposed within the body cover, it is also possible to utilize dynamic air pressure against the running vehicle by disposing the intercooler outside the body cover or, when no body cover is employed as shown in FIG. 21 by directing the cooling air duct inlet (36g) to the front of the vehicle or by providing the intercooler with an air introduction duct and directing the duct to the front of the vehicle.

While the above embodiment is described by way of an example of the scooter type motorcycle, this invention is not limited to such an example but can be applied to any motorcycle as long as it is provided with a unit swing type engine assembly.

According to the supercharger for motorcycles of this third embodiment, since the inlet of air to the intercooler is disposed and formed so that dynamic air pressure is exerted to the inlet, the intercooler functions effectively and additionally prevents adverse effect on the engine performance.

## Claims

1. Motorcycle comprising an engine assembly having a connecting rod operated supercharger mechanism (33a) for compressing intake air by the swinging motion of the connecting rod (25) connecting a piston (24) to a crankshaft (26), an air cleaner (35) for filtering the intake air fed to said supercharger mechanism (33a), an intercooler (36) for cooling the compressed air from said supercharger mechanism (33a) and a supercharger storage tank (37) for storing the compressed air supplied from said intercooler (36), **characterised in that**, said engine assembly (15) is of a unitary swing type design wherein an engine (17) and a rear wheel transmission (18) are assembled as a single unit supporting said air cleaner (35), said intercooler (36) and said supercharger tank (37) so that same jointly swing with said engine assembly (15).

2. Motorcycle as claimed in claim 1, **characterised in that**, said supercharger mechanism (33a) is connected to a lubrication device (100) and a supercharge pressure compression chamber is located on an upper side while an intake chamber of the supercharger mechanism (33a) is located on a lower side, so that air drawn in from an underside of the crank case (21) is discharged at the upper side.

3. Motorcycle as claimed in claims 1 or 2, **characterised in that**, the air cleaner (36) is of a generally triangular shape as seen in a side view and is, as seen in plane view located in a corner area formed by a left wall of a cylinder head (23) and a front wall of a transmission case (18a) and is affixed to the transmission case (18a) and the crankcase (21).

4. Motorcycle as claimed in claim 3, **characterised in that**, an inlet (35a) of the air cleaner (35) opens into a side cover (9) toward an inner side of the motorcycle and an outlet (35b) is located at a lower part of the air cleaner (35), said outlet (35b) being connected to an intake port (21a) of the crankcase (21).

5. Motorcycle as claimed in at least one of the preceding claims 1 to 4, **characterised in that**, the intercooler (36) is of an air cooled type located to cover an inlet (51a) of a cooling fan (51) at a right upper side of the crankcase (21) and is secured to the engine (17) through a fastening means.

6. Motorcycle as claimed in claim 5, **characterised in that**, the intercooler (36) is formed with a compressed air inlet (36a) at is upper front side corner area, and a compressed air outlet (36b) at is upper rear side corner area said inlet (36a) and outlet (36b) being connected to each other through an internal passage (36d) having cooling fins (36c) for increasing heat dissipation along the internal passage (36d).

7. Motorcycle as claimed in claim 6, **characterised in that**, the compressed air inlet (36a) of the intercooler (36) is connected to the outlet (21b) of the crankcase (21) through an inlet side air intake pipe (42) and that a reed valve (115) is provided in the connection area between the air inlet (36a) and the outlet (21b) for preventing a back flow of the compressed air into the crankcase (21).

8. Motorcycle as claimed in claim 7, **characterised in that**, the compressed air outlet (36b) of the intercooler (36) is connected through a connection passage (21c) to an introduction inlet (37a) of the supercharger storage tank (37).

9. Motorcycle as claimed in claim 8, **characterised in that,** the supercharger storage tank (37) is located between the rear wheel transmission (18) and side frames (2c) and is affixed to a top side of a rear wheel transmission case (18a).

10. Motorcycle as claimed in claim 9, **characterised in that,** the supercharger storage tank (37) is located at about the same height as the carburettor (31).

11. Motorcycle as claimed in claims 9 or 10, **characterised in that,** an upper inner wall of the supercharger storage tank (37) is formed with a flow outlet (37b) connected to an intake pipe (45) above the crankcase (21) to the carburettor (31).

12. Motorcycle as claimed in at least one of the preceding claims 1 to 11, **characterised in that,** the supercharger storage tank (37) is located outside an engine assembly profile in the longitudinal direction of the motorcycle and is disposed in the vicinity of the engine (17).

13. Motorcycle as claimed in claim 12, **characterised in that,** the air cleaner (35) is disposed between the rear wheel transmission (18) and side frames (2c) and is affixed to a top side of the transmission case (18a).

14. Motorcycle as claimed in claims 12 or 13 **characterised in that** the supercharger storage tank (37) is of a generally triangular shape as seen in side view and is located in a corner area formed by a cylinder block (22), a left side wall of the cylinder head (23) and a front wall of the transmission case (18), said supercharger storage tank (37) being affixed to the transmission case (18a) and the crankcase (21).

15. Motorcycle as claimed in at least one of the preceding claims 12 to 14, **characterised in that** an air introduction plate (8a) is located in front of the supercharger storage tank (37).

16. Motorcycle as claimed in claim 15, **characterised in that** an introduction port (37a) of the supercharger storage tank (37) is formed in a lower part of an inner wall (37c) of the tank (37) while an outflow port (37b) is formed in an upper part of said inner wall (37c).

17. Motorcycle as claimed in at least one of the preceding claims 1 to 16, **characterised in that** the engine (17) is at least partially and at least circumferentially surrounded by a body cover (8), which is adapted to accommodate said intercooler (36), said body cover (8) being formed with an air introduction inlet (8b) for feeding air to said intercooler (36), said air introduction inlet (8b) being directed such that dynamic air pressure is excerted on said air introduction inlet (8b) while the motorcycle is running.

18. Motorcycle as claimed in claims 17, **characterised in that**, the air introduction opening (8b) is opened downwardly and said body cover (8) is curved from a lower front of the air introduction opening (8b) towards rear upwards of the air introduction opening (8b) so that a foot board forming part of the cover (8) serves as an air introduction plate to exert dynamic air pressure on the air introduction opening (8b).

19. Motorcycle as claimed in claim 17, **characterised in that** an air intake port (8c) is provided in front of the intercooler (36).

20. Motorcycle as claimed in at least one of the preceding claims 17 to 19, **characterised in that** an oil tank (32) is disposed in a corner area formed by the left side walls of the cylinder block (22) and the cylinder head (23) and the transmission case (18a), thus placing the oil tank (32) in a lower part of the vehicle body.

21. Motorcycle as claimed in at least one of the preceding claims 17 to 20, **characterised in that** the intercooler (36) is located to surround the carburettor (31) located above the cylinder head (23) and is affixed to the engine (17) through a fastening means.

22. Motorcycle as claimed in claim 21, **characterised in that**, the intercooler (36) is located inside an air introduction duct (8a) of the body covers (8,9) defined as a foot board (8) and a side cover (9).

23. Motorcycle as claimed in claims 21 or 22, **characterised in that** an intercooler (36) and a supercharger storage tank (37) are designed as an integral structure.

24. Motorcycle as claimed in claim 23, **characterised in that** said integral intercooler and supercharger tank comprising a plurality of cooler pipes (36a), preferably in a flattened shape, with their right and left ends being connected to and opened into inlet and outlet headers (36c,36d).

25. Motorcycle as claimed in claim 24, **characterised in that** each of the cooling pipes (36a) is provided with cooling fins (36f).

26. Motorcycle as claimed in at least one of the preceding claims 23 to 25, **characterised in that** an electric fan (38) is provided at a position approximately opposite to the air introduction duct (8a) of a front outside centre of the intercooler (36).

27. Motorcycle as claimed in claim 26, **characterised in that**, the intercooler (36) is formed with a compressed air inlet (36a) at one side and with a compressed air outlet (36b) on the opposite side.

28. Motorcycle as claimed in claim 27, **characterised in that**, a carburettor (31) is disposed adjacently behind the intercooler (36) and is connected through an intake pipe (45) to the compressed air outlet (36b) of the intercooler (36).

## Patentansprüche

1. Motorrad mit einer Motorbaueinheit, die einen durch eine Pleuelstange betriebenen Superlader-Mechanimus (33a) aufweist, um Ansaugluft durch die Schwingbewegung der Pleuelstange (25) zu komprimieren, die einen Kolben (24) mit einer Kurbelwelle (26) verbindet, einen Luftfilter (35) zum Filtern der Ansaugluft, die dem genannten Superlader-Mechanismus (33a) zugeführt wird, einen Zwischenkühler (36), um die komprimierte Luft von dem genannten Superlader-Mechanismus (33a) zu kühlen, und einen Superlader-Speicherbehälter (37), um die von dem genannten Zwischenkühler (36) zugeführte komprimierte Luft zu speichern, **dadurch gekennzeichnet,** daß die genannte Motorbaueinheit (15) eine einheitliche Schwingkonstruktion ist, wobei ein Motor (17) und ein Hinterradantrieb (18) zu einer einzigen Einheit zusammengebaut sind, die den genannten Luftfilter (35), den genannten Zwischenkühler (36) und den genannten Superladerbehälter (37) trägt, so daß diese gemeinsam mit der genannten Motorbaueinheit (15) schwingen.

2. Motorrad, wie in Anspruch 1 beansprucht, **dadurch gekennzeichnet,** daß der genannte Superlader-Mechanismus (33a) mit einer Schmiereinrichtung (100) verbunden ist und eine Superladerdruck-Kompressionskammer auf einer oberen Seite angeordnet ist, während eine Ansaugkammer des Superlader-Mechanismus (33a) auf einer unteren Seite angeordnet ist, so daß von der Unterseite des Kurbelgehäuses (21) eingesaugte Luft zu der oberen Seite abgegeben wird.

3. Motorrad, wie in Anspruch 1 oder 2 beansprucht, **dadurch gekennzeichnet,** daß der Luftfilter (36) bei Betrachtung in Seitenansicht eine allgemein dreieckige Form aufweist, und sich in der Draufsicht betrachtet in einem Eckenbereich befindet, der von einer linken Wand eines Zylinderkopfes (23) und einer Vorderwand eines Getriebegehäuses (18a) gebildet ist, und an dem Getriebegehäuse (18a) und dem Kurbelgehäuse (21) befestigt ist.

4. Motorrad, wie in Anspruch 3 beansprucht, **dadurch gekennzeichnet**, daß ein Einlaß (35a) des Luftfilters (35) in eine Seitenabdeckung (9) in Richtung zu einer inneren Seite des Motorrads öffnet, und sich ein Auslaß (35b) an einem unteren Teil des Luftfilters (35) befindet, wobei der genannte Auslaß (35b) mit einer Ansaugöffnung (21a) des Kurbelgehäuses (21) verbunden ist.

5. Motorrad, wie in wenigstens einem der vorhergehenden Ansprüche 1 bis 4 beansprucht, **dadurch gekennzeichnet,** daß der Zwischenkühler (36) ein luftgekühlter Typ ist, der angeordnet ist, daß er einen Einlaß (51a) eines Kühlgebläses (51) an einer rechten oberen Seite des Kurbelgehäuses (21) überdeckt und an dem Motor (17) mit Befestigungsmitteln befestigt ist.

6. Motorrad, wie in Anspruch 5 beansprucht, **dadurch gekennzeichnet,** daß der Zwischenkühler (36) mit einem Einlaß (36a) für komprimierte Luft an seinem oberen Vorderseiten-Eckbereich gebildet ist, und einem Auslaß (36b) für komprimierte Luft an seinem oberen Rückseiten-Eckbereich, wobei der Einlaß (36a) mit dem Auslaß (36b) durch einen inneren Kanal (36d) verbunden ist, der Kühlrippen (36c) aufweist, um die Wärmeableitung entlang dem inneren Kanal (36d) zu erhöhen.

7. Motorrad, wie in Anspruch 6 beansprucht, **dadurch gekennzeichnet,** daß der Einlaß (36a) für komprimierte Luft des Zwischenkühlers (36) mit dem Auslaß (21b) des Kurbelgehäuses (21) durch ein Luftansaugrohr (42) auf der Einlaßseite verbunden ist, und daß ein Zungenventil (115) in dem Verbindungsbereich zwischen dem Lufteinlaß (36a) und dem Auslaß (21b) vorgesehen ist, um einen Rückfluß der komprimierten Luft in das Kurbelgehäuse (21) zu verhindern.

8. Motorrad, wie in Anspruch 7 beansprucht, **dadurch gekennzeichnet,** daß der Auslaß (36b) für komprimierte Luft des Zwischenkühlers (36) durch einen Verbindungskanal (21c) mit einem Einführeinlaß (37a) des Superlader-Speicherbehälters (37) verbunden ist.

9. Motorrad, wie in Anspruch 8 beansprucht, **dadurch gekennzeichnet,** daß der Superlader-Speicherbehälter (37) zwischen dem Hinterradantrieb (18) und Seitenrahmen (2c) angeordnet ist und an einer oberen Seite eines Hinterradantriebsgehäuses (18a) befestigt ist.

10. Motorrad, wie in Anspruch 9 beansprucht, **dadurch gekennzeichnet,** daß der Superlader-Speicherbehälter (37) ungefähr auf gleicher Höhe wie der Vergaser (31) angeordnet ist.

11. Motorrad, wie in Anspruch 9 oder 10 beansprucht, **dadurch gekennzeichnet,** daß eine obere, innere Wand des Superlader-Speicherbehälters (37) mit einem Strömungsauslaß (37b) gebildet ist, der mit einem Ansaugrohr (45) oberhalb des Kurbelgehäuses (21) mit dem Vergaser (31) verbunden ist.

12. Motorrad, wie in mindestens einem der vorhergehenden Ansprüche 1 bis 11 beansprucht, **dadurch gekennzeichnet,** daß der Superlader-Speicherbehälter (37) außerhalb des Motorbaueinheitprofils des Motorrads angeordnet ist und in der Nähe des Motors (17) angeordnet ist.

13. Motorrad, wie in Anspruch 12 beansprucht, **dadurch gekennzeichnet,** daß der Luftfilter (35) zwischen dem Hinterradantrieb (18) und Seitenrahmen (2c) angeordnet ist und an der oberen Seite des Übertragungsgehäuses (18a) befestigt ist.

14. Motorrad, wie in Anspruch 12 oder 13 beansprucht, **dadurch gekennzeichnet,** daß der Superlader-Speicherbehälter (37) bei Betrachtung in Seitenansicht eine allgemein dreieckige Form hat und sich in einem Eckenbereich befindet, der durch einen Zylinderblock (22), eine linke Seitenwand des Zylinderkopfes (23) und eine Vorderwand des Antriebsgehäuses (18) gebildet ist, wobei der genannte Superlader-Speicherbehälter (37) an dem Getriebegehäuse (18a) und dem Kurbelgehäuse (21) befestigt ist.

15. Motorrad, wie in mindestens einem der vorhergehenden Ansprüche 12 bis 14 beansprucht, **dadurch gekennzeichnet,** daß eine Lufteinführplatte (8a) vor dem Superlader-Speicherbehälter (37) angeordnet ist.

16. Motorrad, wie in Anspruch 15 beansprucht, **dadurch gekennzeichnet,** daß eine Einführöffnung (37a) des Superlader-Speicherbehälters (37) in einem unteren Teil einer inneren Wand (37c) des Behälters (37) gebildet ist, während einer Auslaßöffnung (37b) in einem oberen Teil der genannten inneren Wand (37c) gebildet ist.

17. Motorrad, wie in wenigstens einem der vorhergehenden Ansprüche 1 bis 16 beansprucht, **dadurch gekennzeichnet,** daß der Motor (17) zumindest teilweise und zumindest umfangsmäßig von einer Karosserieverkleidung (8) umgeben ist, die den genannten Zwischenkühler (36) aufnehmen kann, wobei die genannte Karosserieverkleidung (8) mit einem Lufteinführeinlaß (8b) zur Luftzufuhr zu dem genannten Zwischenkühler (36) gebildet ist, der genannte Lufteinführeinlaß (8b) so ausgerichtet ist, daß ein dynamischer Luftdruck auf den genannten Lufteinführeinlaß (8b) ausgeübt wird, während das Motorrad fährt.

18. Motorrad, wie in Anspruch 17 beansprucht, **dadurch gekennzeichnet,** daß die Lufteinführöffnung (8b) nach unten geöffnet ist und die genannte Körperverkleidung (8) von einer unteren Vorderseite der Lufteinführöffnung (8b) nach hinten aufwärts von der Lufteinführöffnung (8b) gekrümmt ist, so daß ein ein Fußaufstellteil bildendes Teil der Verkleidung (8) als eine Einführplatte dient, um einen dynamischen Luftdruck auf die Lufteinführöffnung (8b) auszuüben.

19. Motorrad, wie in Anspruch 17 beansprucht, **dadurch gekennzeichnet,** daß eine Luftansaugöffnung (8c) vor dem Zwischenkühler (36) vorgesehen ist.

20. Motorrad, wie in wenigstens einem der vorhergehenden Ansprüche 17 bis 19 beansprucht, **dadurch gekennzeichnet,** daß ein Öltank (32) in einem Eckbereich angeordnet ist, der durch die linken Seitenwände des Zylinderblocks (22) und des Zylinderkopfes (23) und das Antriebsgehäuse (18a) gebildet ist, so daß der Öltank (32) in einem unteren Teil des Fahrzeugkörpers angeordnet wird.

21. Motorrad, wie in wenigstens einem der vorhergehenden Ansprüche 17 bis 20 beansprucht, **dadurch gekennzeichnet,** daß der Zwischenkühler (36) angeordnet ist, den Vergaser (31) zu umgeben, der oberhalb des Zylinderkopfes (23) angeordnet ist, und an dem Motor (17) durch eine Befestigungseinrichtung befestigt ist.

22. Motorrad, wie in Anspruch 21 beansprucht, **dadurch gekennzeichnet,** daß sich der Zwischenkühler (36) innerhalb eines Lufteinführkanals (8a) der Karosserieverkleidungen (8, 9) befindet, die als eine Fußaufstellplatte (8) und eine Seitenabdeckung (9) definiert sind.

23. Motorrad, wie in Anspruch 21 oder 22 beansprucht, **dadurch gekennzeichnet,** daß ein Zwischenkühler (36) und ein Superlader-Speicherbehälter (37) in einheitlicher Bauweise konstruiert sind.

24. Motorrad, wie in Anspruch 23 beansprucht, **dadurch gekennzeichnet,** daß die Zwischenkühler-Superladerbehältereinheit eine Mehrzahl Kühlrohre (36a), vorzugsweise in abgeflachter Form, umfaßt, wobei ihre rechten und linken Enden mit Einlaß- und Auslaßköpfen (36c, 36d) verbunden sind und sich in diese öffnen.

25. Motorrad, wie in Anspruch 24 beansprucht, **dadurch gekennzeichnet,** daß jedes der Kühlrohre (36a) mit Kühlrippen (36f) versehen ist.

26. Motorrad, wie in wenigstens einem der vorhergehenden Ansprüche 23 und 25 beansprucht, **dadurch gekennzeichnet,** daß ein elektrisches Gebläse (38) an einer Position ungefähr in Gegenüberlage zu dem Lufteinführkanal (8a) der vorderen, äußeren Mitte des Zwischenkühlers (36) versehen ist.

27. Motorrad, wie in Anspruch 26 beansprucht, **dadurch gekennzeichnet,** daß der Zwischenkühler (36) mit einem Einlaß (36a) für komprimierte Luft auf einer Seite und mit einem Auslaß (36b) für komprimierte Luft auf der gegenüberliegenden Seite gebildet ist.

28. Motorrad, wie in Anspruch 27 beansprucht, **dadurch gekennzeichnet,** daß ein Vergaser (31) nahe hinter dem Zwischenkühler (36) angeordnet ist und durch ein Ansaugrohr (45) mit dem Auslaß (36b) für komprimierte Luft des Zwischenkühlers (36) verbunden ist.

## Revendications

1. Motocycle comprenant un ensemble moteur ayant un mécanisme de suralimentation (33a) actionné par bielle, afin de comprimer de l'air d'admission par le déplacement oscillant de la bielle (25) reliant un piston (24) à un vilebrequin (26), un filtre à air (35) destiné à filtrer l'air d'admission fourni audit mécanisme de suralimentation (33a), un réfrigérant intermédiaire (36) destiné à refroidir l'air comprimé venant dudit mécanisme de suralimentation (33a) et un réservoir de stockage de suralimentation (33) destiné à stocker l'air comprimé fourni depuis ledit réfrigérant intermédiaire (36), caractérisé en ce que ledit ensemble moteur (15) est d'une conception du type oscillant unitaire dans laquelle un moteur (17) et une transmission de roue arrière (18) sont assemblés sous la forme d'unités uniques supportant ledit filtre à air (35), ledit réfrigérant intermédiaire (36) et ledit réservoir de dispositif de suralimentation (36), de manière que ces éléments oscillent à l'unisson avec ledit ensemble moteur (15).

2. Motocycle selon la revendication 1, caractérisé en ce que ledit mécanisme de dispositif de suralimentation (33a) est connecté à un dispositif de lubrification (100) et une chambre de compression à pression de suralimentation est placée sur un côté supérieur, tandis qu'une chambre d'admission du mécanisme de suralimentation (33a) est placée sur un côté inférieur, si bien que l'air extrait depuis la face inférieure du carter de vilebrequin (21) est déchargé au niveau de la face supérieure.

3. Motocycle selon la revendication 1 ou 2, caractérisé en ce que le filtre à air (36) est de forme globalement triangulaire lorsqu'on observe en vue de côté et que, vu en plan, il est placé dans une zone d'angle formée par la paroi gauche d'une culasse (23) et une paroi avant d'un carter de transmission (18a) et est fixé au carter de transmission (18a) et au carter de vilebrequin (21).

4. Motocycle selon la revendication 3, caractérisé en ce qu'une admission (35a) du filtre à air (35) débouche dans un couvercle latéral (9), vers un côté intérieur du motocycle, et une sortie (35b) est située au niveau d'une partie inférieure du filtre à air (35), ladite sortie (35b) étant connectée à un orifice d'admission (21a) du carter de vilebrequin (21).

5. Motocycle selon au moins l'une des revendications 1 à 4 précédentes, caractérisé en ce que le réfrigérant intermédiaire (36) est du type à refroidissement par air, placé pour couvrir une admission (51a) d'un ventilateur de refroidissement (51a) sur un côté supérieur droit du carter de vilebrequin (21) et est fixé au moteur (7) par des moyens de fixation.

6. Motocycle selon la revendication 5, caractérisé en ce que le réfrigérant intermédiaire (36) est constitué d'une entrée d'air comprimé (36a) à sa zone d'angle latérale avant supérieure et une sortie d'air comprimé (35b) sur sa zone d'angle de côté arrière supérieur, lesdites entrée et sortie (36b) étant connectées l'une à l'autre par un passage interne (36d) ayant des ailettes de refroidissement (36c), dans le but d'augmenter la dissipation thermique à la traversée du passage interne (36d).

7. Motocycle selon la revendication 6, caractérisé en ce que l'entrée d'air comprimé (36a) du réfrigérant intermédiaire (36) est connectée à la sortie (21b) du carter de vilebrequin (21) par un tuyau d'admission d'air latéral d'entrée (42), et en ce qu'une soupape flexible (115) est prévue dans la zone de connexion entre l'admission d'air (36a) et la sortie (21b) afin d'empêcher tout écoulement inverse de l'air comprimé à l'intérieur du carter de vilebrequin (21).

8. Motocycle selon la revendication 7, caractérisé en ce que la sortie d'air comprimé (36b) du réfrigérant intermédiaire (36) est connectée par un passage de connexion (21c) à une entrée d'introduction (37a) du réservoir de stockage de suralimentation (37).

9. Motocycle selon la revendication 8, caractérisé en ce que le réservoir de stockage de suralimentation (37) est placé entre la transmission de roue arrière (18) et des cadres latéraux (2c) et est fixé à une face supérieure d'un boîtier de transmission de carter (18a).

10. Motocycle selon la revendication 9, caractérisé en ce que le réservoir de stockage de suralimentation (37) est placé à peu près à la même hauteur que le carburateur (31).

11. Motocycle selon les revendications 9 ou 10, caractérisé en ce qu'une paroi intérieure supérieure du réservoir de stockage de suralimentation (37) est constituée d'une sortie d'écoulement (37b) connectée à un tuyau d'admission (45) au-dessus du carter de vilebrequin (21) allant au carburateur (31).

12. Motocycle selon au moins l'une des revendications 1 à 11 précédentes, caractérisé en ce que le réservoir de stockage de suralimentation (37) est placé à l'extérieur d'un profilé d'ensemble moteur, dans la direction longitudinale du motocycle, et est disposé à proximité du moteur (17).

13. Motocycle selon la revendication 12, caractérisé en ce que le filtre à air (35) est disposé entre la transmission de roue arrière (18) et les cadres latéraux (2c) et est fixé à une face supérieure du carter de transmission (18a).

14. Motocycle selon la revendication 12 ou 13, caractérisé en ce que le réservoir de stockage de suralimentation (37) est de forme globalement triangulaire lorsqu'on observe en vue de côté et est placé dans une zone d'angle formée par un bloc cylindres (22), une paroi latérale gauche de la culasse (23) et une paroi avant du carter de transmission (18), ledit réservoir de stockage de suralimentation (37) étant fixé au carter de transmission (18a) et au carter de vilebrequin (21).

15. Motocycle selon au moins l'une des revendications 12 à 14 précédentes, caractérisé en ce qu'une plaque d'introduction (8a) est placée à l'avant du réservoir de stockage de suralimentation (37).

16. Motocycle selon la revendication 15, caractérisé en ce qu'un orifice d'introduction (37a) du réservoir de stockage de suralimentation (37) est formé dans une partie inférieure d'une paroi intérieure (37c) du réservoir (37), tandis qu'un orifice de sortie d'écoulement (37b) est formé dans une partie supérieure de ladite paroi intérieure (37c).

17. Motocycle selon l'une des revendications 1 à 16 précédentes, caractérisé en ce que le moteur (17) est au moins partiellement et au moins circonférentiellement entouré par un couvercle de corps (8) adapté pour recevoir ledit réfrigérant intermédiaire (37), ledit couvercle de corps (8) étant formé avec une entrée d'introduction (8b) destinée à fournir de l'air vers ledit réfrigérant intermédiaire (36), ladite entrée d'introduction d'air (8b) étant dirigée de manière que la pression d'air dynamique soit exercée sur ladite entrée d'introduction d'air (8b) tandis que le motocycle roule.

18. Motocycle selon la revendication 17, caractérisé en ce que l'ouverture d'introduction d'air (8b) est ouverte vers le bas et ledit couvercle de corps (8) est incurvé depuis une partie inférieure de l'ouverture d'introduction d'air (8b) vers l'arrière et le haut d'ouvertures d'introduction d'air (8b) pour qu'un repose-pied faisant partie du couvercle (8) serve de plaque d'introduction d'air pour exercer une pression d'air dynamique sur l'ouverture d'introduction d'air (8b).

19. Motocycle selon la revendication 17, caractérisé en ce qu'un orifice d'admission d'air (8c) est prévu à l'avant du réfrigérant intermédiaire (36).

20. Motocycle selon au moins l'une des revendications 17 à 19, caractérisé en ce qu'un réservoir d'huile (32) est disposé dans une zone d'angle formée par les parois latérales gauche et le bloc cylindre (22) et la culasse (23) et le carter de transmission (18a) plaçant ainsi le réservoir d'huile (32) à la partie inférieure du corps de véhicule.

21. Motocycle selon au moins l'une des revendications 17 à 20 précédentes, caractérisé en ce que le réfrigérant intermédiaire (36) est placé pour entourer le carburateur (31) placé au-dessus de la culasse (23) et est fixé au moteur (17) par des moyens de fixation.

22. Motocycle selon la revendication 21, caractérisé en ce que le réfrigérant intermédiaire (36) est placé à l'intérieur d'une conduite d'introduction d'air (8a) des couvercles de corps (8, 9) définis comme repose-pied (8) et couvercle latéral (9).

23. Motocycle selon la revendication 21 ou 22, caractérisé en ce que le réfrigérant intermédiaire (36) et que le réservoir de stockage de suralimentation (37) sont conçus sous forme de structures monoblocs.

24. Motocycle selon la revendication 23, caractérisé en ce que ledit réfrigérant intermédiaire et ledit réservoir de suralimentation, monoblocs, comprennent une pluralité de tubes de refroidissement (36a), de préférence réalisés sous une forme aplatie, leurs extrémités droite et gauche étant connectées à et débouchant dans des collecteurs d'entrée et de sortie (36c, 36d).

25. Motocycle selon la revendication 24, caractérisé en ce qu'un chacun des tuyaux de refroidissement (36c) est doté d'ailettes de refroidissement (36f).

26. Motocycle selon au moins l'une des revendications 23 à 25 précédentes, caractérisé en ce qu'un ventilateur électrique (38) est prévu en une position pré-opposée à celle du conduit d'introduction d'air (8a) d'un centre extérieur avant du réfrigérant intermédiaire (36).

27. Motocycle selon la revendication 26, caractérisé en ce que le réfrigérant intermédiaire (36) est formé avec une entrée d'air comprimé (36a) sur un côté et avec une sortie d'air comprimé (36b) sur le côté opposé.

28. Motocycle selon la revendication 27, caractérisé en ce qu'un carburateur (31) est disposé de façon adjacente derrière le réfrigérant intermédiaire (36) et est connecté par un tuyau d'admission (45) à la sortie d'air comprimé (36b) du radiateur (36).
